(19) Europäisches Patentamt
European Patent Office
Office européen des brevets

(11) Publication number: **0 406 888 A2**

(12) **EUROPEAN PATENT APPLICATION**

(21) Application number: **90112941.1**

(22) Date of filing: **06.07.90**

(51) Int. Cl.5: **C08K 5/32**, C08L 63/02, C08L 75/04, C08L 83/04, C08G 59/50

(30) Priority: **07.07.89 JP 174235/89**
**19.10.89 JP 270329/89**
**02.02.90 JP 22053/90**

(43) Date of publication of application:
**09.01.91 Bulletin 91/02**

(84) Designated Contracting States:
**DE FR GB IT NL**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **Matsuda, Yasuo, c/o Yokohama Works**
**Sumitomo Electric Ind. Ltd., 1, Taya-cho**
**Sakae-ku, Yokohama-shi, Kanagawa-ken(JP)**
Inventor: **Hosoya, Toshifumi, c/o Yokohama Works**
**Sumitomo Electric Ind. Ltd., 1, Taya-cho**
**Sakae-ku, Yokohama-shi, Kanagawa-ken(JP)**
Inventor: **Nonaka, Tsuyoshi, c/o Yokohama Works**
**Sumitomo Electric Ind. Ltd., 1, Taya-cho**
**Sakae-ku, Yokohama-shi, Kanagawa-ken(JP)**
Inventor: **Kobayashi, Yuji, c/o Yokohama Works**
**Sumitomo Electric Ind. Ltd., 1, Taya-cho**
**Sakae-ku, Yokohama-shi, Kanagawa-ken(JP)**
Inventor: **Uemiya, Takafumi, c/o Osaka Works**
**Sumitomo Electric Ind. Ltd., 1-3, Shimaya 1-chome**
**Konohana-ku, Osaka-shi, Osaka-fu(JP)**

(74) Representative: **Hansen, Bernd, Dr. Dipl.-Chem. et al**
**Hoffmann, Eitle & Partner Patent- und Rechtsanwälte Arabellastrasse 4e 4**
**D-8000 München 81(DE)**

(54) **Nonlinear optical polymer composition and method for producing the same.**

(57) A nonlinear optical polymer composition which comprises a polymer matrix comprising a thermosetting resin and a nonlinear optical compound molecules of which are poled in the polymer matrix in a dispersed state or in a solid solution state, which has improved stability and durability.

EP 0 406 888 A2

# NONLINEAR OPTICAL POLYMER COMPOSITION AND METHOD FOR PRODUCING THE SAME

## BACKGROUND OF THE INVENTION

### Field of the Invention

The present invention relates to a nonlinear optical polymer composition which can be used as a material for an optical element by utilizing its nonlinear optical characteristics in an optoelectronics field, and a method for producing such polymer composition.

### Description of the Related Art

Recently, highly functional organic materials are vigorously developed for use in the optoelectronics field. One example of elements utilizing such highly functional organic material is a nonlinear optical element which is used in a second harmonic generation device, an optical memory or a light modulation device.

The "nonlinear optical" material or compound used in the specification is intended to mean a material or compound exhibiting an optical phenomenon which does not proportional to an amplitude of an incident light and includes second or higher order effects (nonlinear effects).

In general, polarization P induced by the incident light in the material is expressed by the following equation:

$$P = \epsilon_0 \chi^{(1)}E + \epsilon_0 \chi^{(2)}E^2 + \epsilon_0 \chi^{(3)}E^3 + --- + \epsilon_0 \chi^{(n)}E^n \qquad (I)$$

in which $\chi^{(n)}$ is an n-th order nonlinear susceptibility.

As a nonlinear optical compound, there are known inorganic compounds such as $LiNbO_3$, $KH_2PO_4$, $BaTiO_3$, etc. and organic compounds such as 2-methyl-4-nitroaniline, urea, m-nitroaniline, etc. Organic crystalline 2-metyl-4-nitroaniline (MNA) is well known as a second order nonlinear optical compound. Among polymers, polyvinylidene fluoride is known to exhibit a third order nonlinear effect. In addition, liquid crystals achieve the third order nonlinear effect.

The nonlinear optical compound is used in the form of a single crystal and also compounded in a matrix such as a polymer, in particular, in a dispersed state or a solid solution state. The compounding of the nonlinear optical compound in the polymer matrix is advantageous in view of good processability and the like, and it is preferred that molecules of the nonlinear optical compound are poled in one direction in the matrix.

The molecules may be poled by various methods. For example, in one of the preferred methods, as the nonlinear optical active compound, is used an organic compound which has an electron donating group, an electron accepting group, a $\pi$ electron system, a large molecular hyper-polarizability ($\beta$) and a large permanent dipole moment, and which is easily poled in an electric field, and a plate or a laminate comprising a composite material containing the above nonlinear optical compound is produced in a strong electric field (poling treatment).

Preferred examples of the organic nonlinear optical active compound which is suitable for poling in the electric field are dimethylaminonitrostilbene and p-nitroaniline.

When a polymer is used as a matrix, the matrix polymer and the nonlinear optical compound are dissolved in a solvent in which they are both dissolved and then the solvent is evaporated off in the electric field, or the nonlinear optical compound is mixed in a polymer melt and the mixture is cooled in the electric field, whereby the nonlinear optical compound is poled in the polymer matrix (cf. Polymer Communications, 30 , February 1989, 40-43).

Examples of the polymer for the matrix are thermoplastic resins having a linear molecular structure such as polymethyl methacrylate, polycarbonate, polyvinylidene fluoride, polystyrene, polyamide, polyimide, polyamideimide, polyether and polyurethane.

Such nonlinear optical material will find applications in an optical computer or for increasing an information recording density, and the organic nonlinear optical materials are highly interested in the art.

The nonlinear optical material comprising the polymer matrix and the nonlinear optical compound contained in the matrix in the dispersed or solid solution state has good functions but its optical characteristics will be deteriorated as time passes. Therefore, to achieve high reliability of the optical element, it is highly desired to improve long-term stability, namely durability of the nonlinear optical

material.

Since increase of nonlinear optical effect of the nonlinear optical material will widen the application field of the material in the nonlinear elements and makes it possible to develop an element having high performances, it is important to increase the nonlinear optical effect.

## SUMMARY OF THE INVENTION

One object of the present invention is to provide a polymer matrix suitable for the production of a nonlinear optical material.

Another object of the present invention is to provide a novel nonlinear optical polymer composition.

A further object of the present invention is to provide a method for producing a novel nonlinear optical polymer composition.

A yet further object of the present invention is to provide an optical control device comprising the novel nonlinear optical material.

According to the first aspect of the present invention, there is provided a nonlinear optical polymer composition which comprises a polymer matrix comprising a thermosetting resin and a nonlinear optical compound mole cules of which are poled in the polymer matrix in a dispersed state or in a solid solution state.

According to the second aspect of the present invention, there is provided a method for producing a nonlinear optical polymer composition which process comprises steps of mixing a nonlinear optical compound in a polymer matrix comprising an uncured thermosetting resin, poling molecules of the nonlinear optical compound before the thermosetting resin is completely cured and completely curing the thermosetting resin during or after the poling treatment of the nonlinear optical compound.

According to the third aspect of the present invention, there is provided an optical control device comprising at least one optical fiber or optical waveguide which comprises a core, a cladding surrounding the core and a layer surrounding the cladding wherein at least one of the core, the cladding and the layer comprises the novel nonlinear optical polymer composition of the present invention, and at least one pair of electrodes which is attached to the optical fiber or waveguide at two separated points, in which, when a voltage applied between the electrodes are changed, a refractive index of the nonlinear optical material is changed so that at least one of a pass, a strength and a phase of light transmitted through the optical fiber or optical waveguide is controlled.

According to the fourth aspect of the present invention, there is provided a waveguide type secondary harmonic generation device comprising an optical fiber or waveguide which comprises a core, a cladding surrounding the core and a layer surrounding the cladding wherein at least one of the core, the cladding and the layer comprises the nonlinear optical polymer composition of the present invention.

## BRIEF DESCRIPTION OF THE DRAWING

Figure is a graph showing relative strength of secondary harmonic generation from the resin films prepared in Examples 1 and 2 and Comparative Example 1.

## DETAILED DESCRIPTION OF THE INVENTION

Since the thermosetting resin has better durability and light transmission than the thermoplastic resin, the nonlinear optical polymer composition comprising the thermosetting resin matrix is more stable and more effectively utilizes the performances of the nonlinear optical compound.

The polymer matrix used in the present invention comprises a single thermosetting resin or a mixture of the thermosetting resins. Further, with the thermosetting resin(s), other modifier resin or rubber may be blended or copolymerized in such amount that the function of the thermosetting resin is not deteriorated.

The thermosetting resin constituting the matrix in the present invention is any resin which can be easily three-dimensionally crosslinked (cured) with heat. Specific examples of the thermosetting resin are an epoxy resin, an urethane resin, an unsaturated polyester resin, a polyimide resin, a silicone resin, a diallyl phthalate resin and a phenol resin.

The thermosetting resin is preferably an anionically or cationically polymerized resin since the curing can be effected without degradation or modification of the nonlinear optical compound.

The thermosetting resin used in the present invention preferably contains chemically bonded polyfunctional monomer having at least two reactive functional groups so that it is effectively three-dimensionally crosslinked.

The amount of the polyfunctional monomer contained in the thermosetting resin is not critical, and preferably 5 to 50 parts by weight per 100 parts by weight of the resin.

Specific examples of the polyfunctional monomer are a monomer having an acrylic double bond such as trimethylolpropane (meth)acrylate, trimethylolethane (meth)acrylate and tetraethyleneglycol diacrylate, and a polyallyl compound such as triallyl (iso)cyanurate and triallyl trimellitate.

A method for curing the thermosetting resin is not critical and can be a widely employed method such as hot air heating, far infrared ray heating or dielectric heating.

In order to thermally cure the resin, a curing agent (for example, amine compounds, acid anhydrides, phenol compounds and the like) or a curing catalyst or initiator (for example, peroxides, azo compounds and the like) which is suitable for the thermosetting resin can be used.

The nonlinear optical compound used in the present invention is a compound which exhibits the nonlinear optical effect to the incident light. Specific examples of such compound are 2-methyl-4-nitroaniline (MNA), m-nitroaniline (m-NA), p-nitroaniline (p-NA), 4-diethylamino-4′-nitrostilbene (DEANS), N-(4-nitrophenyl)-N-methylaminoacetonitrile (NPAN), 2-cyclooctylamino-5-nitropyridine (COANP), cyanine-p-toluenesulfonic acid, 2-cyclo-4-methyl-nitroaniline and N-[5-(2-nitro)-pyridyl]-propanol (IPNP).

Preferable nonlinear optical compound is one having a tertiary amino group, and its specific examples are N,N-dimethylamino-p-nitroaniline (DAPNA), N,N-dimethylamino-m-nitroaniline, N,N-dimethylamino-4-nitro-o-toluidine (DANOT), N,N-dimethylamino-4-nitro-m-toluidine, 4-dimethylamino-4′-nitrostilbene, 4-diethylamino-4′-nitrostilbene (DANS), 4-dipropylamino-4′-nitrostilbene, 4-dibutylamino-4′-nitrostilbene, 4-dipentylamino-4′-nitrostilbene, 4-dihexylamino-4′-nitrostilbene, 4-ethylmethylamino-4′-nitrostilbene, 4-methylpropylamino-4′-nitrostilbene, 4-butylmethylamino-4′-nitrostilbene, 4-methylpentylamino-4′-nitrostilbene, 4-hexylmethylamino-4′-nitrostilbene, 4-ethylpropylamino-4′- nitrostilbene, 4-butylethylamino-4′-nitrostilbene, 4-ethylpentylamino-4′-nitrostilbene, 4-ethylhexylamino-4′-nitrostilbene, 4-butylpropylamino-4′-nitrostilbene, 4-pentylpropylamino-4′-nitrostilbene, 4-hexylpropylamino-4′-nitrostilbene, 4-butylpentylamino-4′-nitrostilbene, 4-butylhexylamino-4′-nitrostilbene, 4-hexylpentylamino-4′-nitrostilbene, 2-[ethyl[4-[(4-nitrophenyl)azo]phenyl]amino]ethanol (Redl), 2-[methyl[4-[(4-nitrophenyl)azo]phenyl]amino]ethanol, 2-[propyl[4-[(4-nitrophenyl)azo]phenyl]amino]ethanol, 2-[butyl[4-[(4-nitrophenyl)azo]phenyl]amino]ethanol, 2-[pentyl[4-[(4-nitrophenyl)azo]phenyl]amino]ethanol, 2-[hexyl[4-[(4-nitrophenyl)azo]phenyl]amino]ethanol, 2-[ethyl[4-[(4-nitrophenyl)azo]phenyl]amino]methanol, 2-[ethyl[4-[(4-nitrophenyl)azo]phenyl]amino]propanol, 2-[ethyl[4-[(4-nitrophenyl)azo]phenyl]amino]butanol, 2-[ethyl[4-[(4-nitrophenyl)azo]phenyl]amino]pentanol, 2-[ethyl[4-[(4-nitrophenyl)azo]phenyl]amino]hexanol, N-4-nitrophenyl propanate, 2-[methyl[4-[(4-nitrophenyl)-azo]phenyl]amino]methanol, 2-[methyl[4-[(4-nitrophenyl)azo]phenyl]amino]propanol, 2-[methyl[4-[(4-nitrophenyl)azo]phenyl]amino]butanol, 2-[methyl[4-[(4-nitrophenyl)azo]phenyl]amino]pentanol, 2-[methyl[4-[(4-nitrophenyl)azo]phenyl]amino]hexanol, 2-[propyl[4-[(4-nitrophenyl)azo]phenyl]amino]methanol, 2-[propyl-[4-[(4-nitrophenyl)azo]phenyl]amino]propanol, 2-[propyl[4-[(4-nitrophenyl)azo]phenyl]amino]butanol, 2-[propyl[4-[(4-nitrophenyl)azo]phenyl]amino]pentanol, 2-[propyl[4-[(4-nitrophenyl)azo]phenyl]amino]hexanol, 2-[butyl[4-[(4-nitrophenyl)azo]phenyl]amino]methanol, 2-[butyl[4-[(4-nitrophenyl)azo]phenyl]amino]propanol, 2-[butyl[4-[(4-nitrophenyl)azo]phenyl]amino]butanol, 2-[butyl[4-[(4-nitrophenyl)azo]phenyl]amino]pentanol, 2-[butyl[4-[(4-nitrophenyl)azo]phenyl]amino]hexanol, 2-[pentyl[4-[(4-nitrophenyl)azo]phenyl]amino]methanol, 2-[pentyl[4-[(4-nitrophenyl)azo]phenyl]amino]propanol, 2-[pentyl[4-[(4-nitrophenyl)azo]phenyl]amino]butanol, 2-[pentyl[4-[(4-nitrophenyl)azo]phenyl]amino]pentanol, 2-[pentyl[4-[(4-nitrophenyl)azo]phenyl]amino]hexanol, 2-[hexyl[4-[(4-nitrophenyl)azo]phenyl]amino]methanol, 2-[hexyl[4-[(4-nitrophenyl)azo]phenyl]amino]propanol, 2-[hexyl[4-[(4-nitrophenyl)azo]phenyl]amino]butanol, 2-[hexyl[4-[(4-nitrophenyl)azo]phenyl]amino]pentanol and 2-[hexyl[4-[(4-nitrophenyl)azo]phenyl]amino]hexanol.

The amount of the nonlinear optical compound to be contained in the thermosetting resin is from 1 to 50 parts by weight, preferably from 5 to 30 parts by weight per 100 parts by weight of the thermosetting resin.

The polymer matrix comprising the thermosetting resin may contain various additives which are conventionally used in the optical element. Examples of the additives are antioxidants, UV light absorbing agents, silane coupling agents and the like.

Now, the method for producing the nonlinear optical polymer composition of the present invention will be explained.

First, the thermosetting resin, the nonlinear optical compound and the optional additives are mixed to disperse or dissolve the nonlinear optical compound in the thermosetting resin. In the present invention, the poling of the molecules of nonlinear optical compound should be carried out before the thermosetting resin is completely cured. That is, the poling of the molecules may be carried out when the thermosetting is not

cured at all or thermosetting resin is partly cured but not completely cured. After the molecule of nonlinear optical compound is poled, the curing of the thermosetting resin is completed.

The poling of the molecules can be effected by any conventional means such as stretching or application of electric field. The application of electric field is preferred since it is suitable for the poling of a thin film form nonlinear optical material.

The poling in the electric field is carried out when the polymer matrix is in a liquid state in which the molecules of nonlinear optical compound can easily move, that is when the temperature of the polymer matrix is above the freezing point of the resin, for one minute to five hours, preferably 30 minutes to three hours while applying the electric field in a range in which dielectric breakdown does not occur, for example, at 1 to 100 kV/ mm. When the freezing point of the thermosetting resin is room temperature or lower, the poling treatment is preferably carried out at a temperature not higher than room temperature and higher than the freezing point.

During or after the poling treatment, the thermosetting resin is cured.

The nonlinear optical polymer composition of the present invention can be used as a nonlinear optical material to be used for assembling a secondary harmonic generation device, an optical memory and a light modulation device.

In one preferred embodiment, the nonlinear optical device is an optical control device comprising at least one optical fiber or optical waveguide which comprises a core, a cladding surrounding the core and a layer surrounding the cladding wherein at least one of the core, the cladding and the layer comprises the nonlinear optical polymer composition of the present invention, and at least one pair of electrodes which is attached to the optical fiber or waveguide at two separated points, in which, when a voltage applied between the electrodes are changed, a refractive index of the nonlinear optical material is changed so that at least one of a pass, a strength and a phase of light transmitted through the optical fiber or optical waveguide is controlled.

In another preferred embodiment, the nonlinear optical device is a waveguide type secondary harmonic generation device comprising an optical fiber or waveguide which comprises a core, a cladding surrounding the core and a layer surrounding the cladding wherein at least one of the core, the cladding and the layer comprises the nonlinear optical polymer composition of the present invention.

The conventional nonlinear optical polymer composition comprising the thermoplastic resin as a matrix has poor durability, that is, its optical characteristics are deteriorated as time passes. A mechanism for such deterioration may be assumed as follows:

In the conventional nonlinear optical material, since the thermoplastic polymer is used as the matrix and the nonlinear optical compound is poled in the matrix in a melt or a solution of the thermoplastic resin, the orientation of the molecules of nonlinear optical compound is maintained just after the production of the nonlinear optical polymer composition and the composition has good optical characteristics. However, since the polymer chains of the thermoplastic resin move to some extent by the micro-Brownian motion even at room temperature, the orientation of the molecules of nonlinear optical compound is disturbed as time passes so that the optical characteristics of the composition are deteriorated.

According to the present invention, since the molecules of nonlinear optical compound are poled in the polymer matrix comprising the thermosetting resin before the thermosetting resin is completely cured and then the resin is cured, the thermosetting resin can be three dimensionally crosslinked with keeping good orientation of the molecules of nonlinear optical compound, so that the orientation of the molecules of nonlinear optical compound can be maintained and the optical characteristics of the composition is hardly deteriorated for a long time.

The temperature and time in the poling treatment and/or in the curing step of the thermosetting resin will influence the oriented state of the molecules of nonlinear optical compound. When the temperature is too high, the orientation of the molecules may be disturbed by motion of the molecules of the polymer and the nonlinear optical compound. Therefore, the poling treatment is preferably carried out at a temperature as low as possible. However, the temperature should not be so low that the resin cannot maintain a flowable state. When the molecules of nonlinear optical compound is poled just before the completion of curing of the thermosetting resin while the resin is still flowable, they are well poled.

When the thermosetting resin is a cationically or anionically polymerized one, cations or anions are liberated by the application of thermal energy to the resin but no radical is generated.

When an epoxide is used as a monomer for producing the thermosetting resin as the matrix, an acid anhydride is used as a polymerization initiator and a tertiary amine is used as a polymerization catalyst, the polymerization is initiated and propagated as follows (cf. "New Epoxy Resins" edited by Hiroshi Kakiuchi, published by Shoukodo in 1985, page 375):

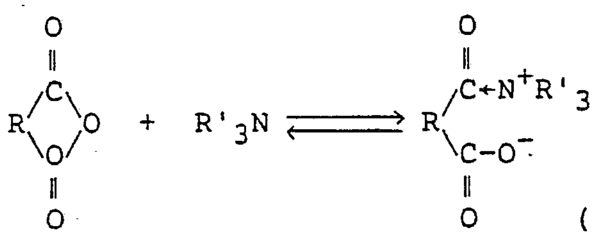

(I)

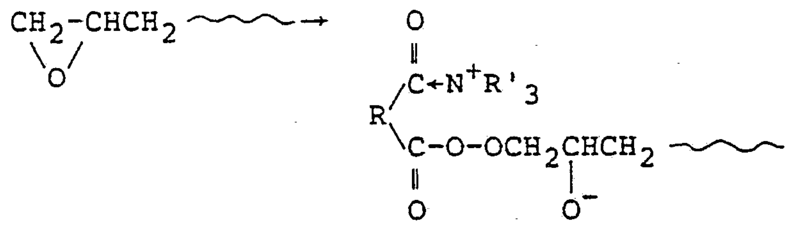

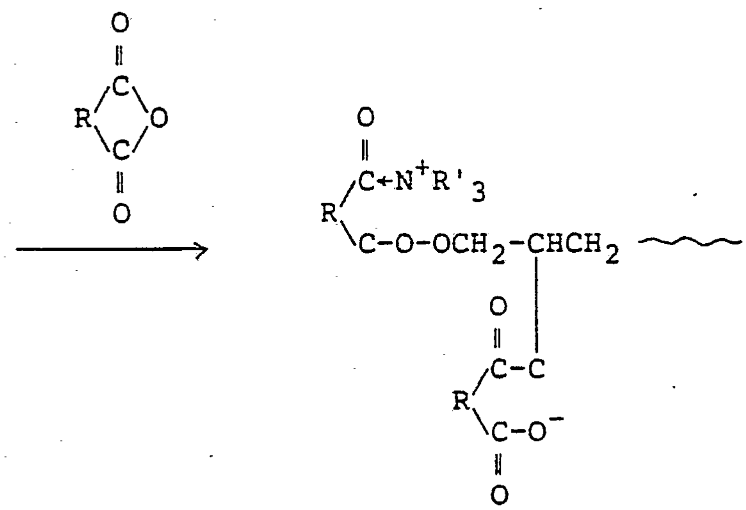

Therefore, the monomer or the polymer hardly reacts with the nonlinear optical compound and hardly deteriorates the nonlinear optical polymer composition. Therefore, if the amount of the nonlinear optical compound in the polymer matrix is the same, the nonlinear optical polymer composition has larger secondary harmonic generation (SHG).

In the present invention, the compound having a tertiary amino group is preferably used as the nonlinear optical compound. The reason for this is as follows:

If the nonlinear optical compound has a primary or secondary amino group as the donor group, its hydrogen atom functions as a proton so that the compound easily reacts with other compound and is easily degraded. When the nonlinear optical compound is degraded, the nonlinear optical properties may disappear. For example, 2-methyl-4-aminiline (MNA) is used as the nonlinear optical compound, it becomes black when the electric field is applied. Therefore, the compound having the primary or secondary amino group is less suitable. Since the compound having the tertiary amine group has no hydrogen that functions as a proton, a nucleophilic reaction of the compound with other compound does not proceed so that the compound is stable and not degraded. Therefore, when the amount of the nonlinear optical compound in the polymer matrix is the same, the nonlinear optical polymer composition has larger SHG.

## PREFERRED EMBODIMENTS OF THE INVENTION

The present invention will be illustrated by following Examples, in which "%" is by weight unless otherwise indicated.

Example 1

A mixture of 96 % of a thermosetting resin (Bisphenol-A type epoxy resin, Epikote distributed by Yuka-Shell Epoxy Co., Ltd.) and 4 % of 4-dimethylamino-4′-nitrostilbene (DANS) was dissolved in chloroform at a concentration of 10 % and spin coated to a thickness of about 30 µm on a glass plate on which a $SnO_2$ film as an electrode had been coated. Then, the coated liquid film was heated at 80° C for 10 minutes to a half-cured state. On the half-cured film, a gold thin film as an electrode was vapor deposited. Between the electrodes, an electric field of 20 kV/mm was applied at 100° C for one hour. Then, the resin film was heated at 120° C for 2 hours while applying the same electric field to complete the curing of the resin.

To the polymer thin film formed as above, a Nd-YAG laser beam having a wevelength of 1.064 µm was irradiated and strength of secondary harmonic generation (SHG) was measured over 120 hours. The results are plotted in Figure with the original strength being 1.0 (100 %) (the curve a).

The decrease of SHG was small.

Comparative Example 1

In the same manner as in Example 1 but using a polymethyl methacrylate (a thermoplastic resin) in place of the thermosetting resin, a resin film was coated at a thickness of about 30 µm on the glass plate having the $SnO_2$ film and the gold thin film was vapor deposited. Then, the resin film was heated at 100° C for one hour while applying the electric field of 20 kV/mm to pole the DANS molecules followed by cooling.

The SHG strength of the formed resin film was measured in the same manner as in Example 1. The results are plotted in Figure (the curve b).

The SHG strength decreased greatly as time passed.

Example 2

A mixture of 96 % of a thermosetting resin (Bisphenol-A type epoxy resin, Epikote distributed by Yuka-Shell Epoxy Co., Ltd.) and 4 % of 4-dimethylamino-4′-nitrostilbene (DANS) was dissolved in chloroform at a concentration of 95 % and sandwiched at a thickness of about 30 µ between glass plates on each inside surface of which $SnO_2$ for electrode had been coated. Then, the liquid film between the glass plates was heated at 100° C for one hour while applying the electric field of 20 kV/mm and then at 120° C for 2 hours while applying the same electric field to complete curing of the resin.

To the polymer thin film formed as above, the same Nd-YAG laser beam as used in Example 1 was irradiated and strength of SHG was measured over 120 hours. The results are plotted in Figure with the original strength being 1.0 (100 %) (the curve c).

The decrease of SHG was small.

Example 3

In the same manner as in Example 2 but using a solution of 96 % of thermosetting silicone resin (polydiphenylsiloxane type) and 4 % of DANS in chloroform at a concentration of 95 %, a resin film was formed and cured between a pair of the same glass plates.

The strength of SHG from the formed film was measured in the same manner as in Example 2. The original strength of SHG was 106% of that measured in Example 5.

Example 4

In the same manner as in Example 2 but using a solution of 96 % of a thermosetting silicone resin (polydiphenylsiloxane type) and 4 % of MNA which is a nonlinear optical compound having a primary amino group in chloroform at a concentration of 95 %, a resin film was formed and cured between a pair of the same glass plates. The film became black when the electric field was applied.

The strength of SHG from the formed film was measured in the same manner as in Example 2. The original strength of SHG was 67 % of that measured in Example 5.

Example 5

In the same manner as in Example 2 but using a solution of 96 % of the bisphenol-A type epoxy resin (Epikote) as used in Example 1 and 4 % of MNA in chloroform at a concentration of 95 %, a resin film was formed and cured between a pair of the same glass plates.

The strength of SHG from the formed film was measured in the same manner as in Example 2. Discoloration of the thin film was smaller than in Comparative Example 1. The original strength of SHG from the films prepared in Examples 1-5 and Comparative Example 1 is summarized in Table 1 with the original strength of SHG in Example 5 being 100 %. The original strength of SHG in Example 5 is larger than those in Example 4 or Comparative Example 1.

Table 1

| Example No. | Resin | Curing reaction | Nonlinear optical compound | Original strength of SHG |
|---|---|---|---|---|
| 1 | Thermosetting epoxy resin | Heat Cationic | DANS | 133 % |
| Comp. 1 | Thermoplastic PMMA | Cooling | DANS | 89 % |
| 2 | Thermosetting epoxy resin | Heat Cationic | DANS | 133 % |
| 3 | Thermosetting silicone resin | Heat | DANS | 106 % |
| 4 | Thermosetting silicone resin | Heat | MNA | 67 % |
| 5 | Thermosetting epoxy resin | Heat Cationic | MNA | 100 % |

Example 6

A thermosetting resin shown in Table 2 was prepared in the presence of a nonlinear optical compound which was dissolved in the resin at 100 °C while applying the electric field of 100 kV/mm to form a film having a thickness of from 100 to 120 μm.

The used thermosetting resins were:
Epoxy resin: Bisphenol-A type epoxy resin
Urethane resin: Toluene-2,4-diisocyanate type rethane resin
Silicone resin: Polydiphenylsiloxane type resin
Fluororesin: Bisphenol-AF type fluororesin

The used nonlinear optical compound was p-nitroaniline (p-NA), 2-methyl-4-nitroaniline (MNA), N-amino-p-nitroaniline (APNA) or N-methylamino-4-nitro-o-toluidine (MANOT). The solubility of these compounds are at least 10 %.

The strength of SHG from the film was measured as follows:

As a light source, a Nd-YAG laser was used and the light radiated from the film was passed through a monochlometer to detect only the strength of SHG light having a wavelength of 0.532 μm with a photomultiplier.

A part of each thin film was discolored.

The used resin, the used non-linear optical compound and the relative strength of SHG are shown in Table 2.

Table 2

| Resin | Nonlinear optical compound | Relative strength of SHG |
|---|---|---|
| Thermosetting epoxy resin | p-NA<br>MNA<br>APNA<br>MANOT | 1.0<br>1.1<br>1.3<br>1.4 |
| Thermosetting urethane resin | p-NA<br>MNA<br>APNA<br>MANOT | 1.0<br>1.2<br>1.3<br>1.5 |
| Thermosetting silicone resin | p-NA<br>MNA<br>APNA<br>MANOT | 1.1<br>1.2<br>1.4<br>1.5 |
| Thermosetting fluororesin | p-NA<br>MNA<br>APNA<br>MANOT | 1.1<br>1.1<br>1.3<br>1.4 |

## Claims

1. A nonlinear optical polymer composition which comprises a polymer matrix comprising a thermosetting resin and a nonlinear optical compound molecules of which are orientated in the polymer matrix in a dispersed state or in a solid solution state.

2. The nonlinear optical polymer composition according to claim 1, wherein said nonlinear optical compound has a tertiary amino group.

3. The nonlinear optical polymer composition according to claim 1, wherein said thermosetting resin is an anionically or cationically polymerized resin.

4. The nonlinear optical polymer composition according to claim 1, wherein an amount of said nonlinear optical compound is from 1 to 50 parts by weight per 100 parts by weight of said thermosetting resin.

5. A method for producing a nonlinear optical polymer composition which process comprises steps of mixing a nonlinear optical compound in a polymer matrix comprising an uncured thermosetting resin, poling molecules of the nonlinear optical compound before the thermosetting resin is completely cured and completely curing the thermosetting resin during or after the poling treatment of the nonlinear optical compound.

6. The method according to claim 5, wherein said thermosetting resin has a freezing point not higher than room temperature, and the molecules of the nonlinear optical compound are poled at a temperature higher than said freezing point and not higher than room temperature.

7. An optical control device comprising at least one optical fiber or optical waveguide which comprises a core, a cladding surrounding the core and a layer surrounding the cladding wherein at least one of the core, the cladding and the layer comprises a nonlinear optical polymer composition claimed in claim 1, and at least one pair of electrodes which is attached to the optical fiber or waveguide at two separated points.

8. A waveguide type secondary harmonic generation device comprising an optical fiber or waveguide which comprises a core, a cladding surrounding the core and a layer surrounding the cladding wherein at least one of the core, the cladding and the layer comprises a nonlinear optical polymer claimed in claim 1.

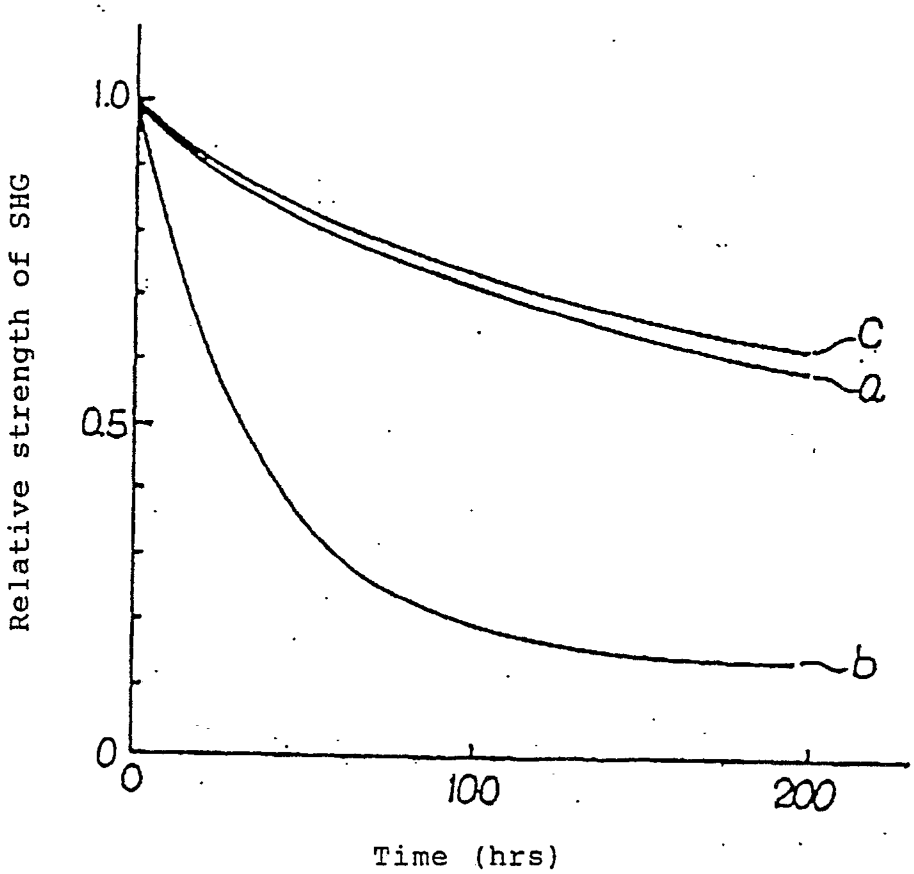
1.0
0.5
0
0
100
200
c
a
b
Relative strength of SHG
Time (hrs)